# FASCICULE DE BREVET EUROPEEN

(11) **EP 4 260 525 B1**
(45) Date de publication et mention de la délivrance du brevet: **04.03.2026**
(21) Numéro de dépôt: 21834785.4
(22) Date de dépôt: 08.12.2021
(51) Int. Cl.: H04L 12/46, H04L 45/00

(54) **ARCHITECTURE D'ÉCHANGES DE FLUX DE DONNÉES DANS UNE FORMATION D'ENGINS MOBILES ET PROCÉDÉ D'ÉCHANGES ASSOCIÉ**
ARCHITEKTUR FÜR DATENSTROMAUSTAUSCH IN EINER FORM VON MOBILEN MASCHINEN UND ZUGEHÖRIGES VERFAHREN FÜR DEN AUSTAUSCH
ARCHITECTURE FOR DATA STREAM EXCHANGES IN A FORMATION OF MOBILE MACHINES AND ASSOCIATED METHOD FOR EXCHANGES

(30) Priorité: 11.12.2020 FR 2013051
(43) Date de publication de la demande: 18.10.2023
(73) Titulaire: NAVAL Group, 75015 Paris (FR)
(72) Inventeur: HAIRION, David, 83190 OLLIOULES (FR); SIMON, Pierre, 84240 LA TOUR D'AIGUES (FR)
(74) Mandataire: Lavoix
(86) Numéro de dépôt international: PCT/EP2021/084804
(87) Numéro de publication internationale: WO 2022/122823

(56) Documents cités:
- US-A1- 2020 120 022

## Description

La présente invention concerne une architecture d'échanges de flux de données dans une formation d'engins mobiles.

La présente invention concerne également un procédé d'échanges associé à une telle architecture.

De manière connue en soi, comme par exemple dans US 2020/120022 A1, de tels engins sont propres à échanger des données numériques entre eux et éventuellement avec un centre de commandement via des liaisons de communication établies entre eux.

Ces données numériques peuvent être de différentes natures.

Ainsi, par exemple, ces données peuvent comprendre des flux de données relatives aux échanges téléphoniques entre au moins certains des engins. Ces flux de données, bien que généralement peu volumineux, doivent être transmis en priorité afin d'assurer la qualité de service.

Les données échangées peuvent comprendre également des données stratégiques par exemple relatives au combat en cours. Il est clair que ces données doivent être transmises non-seulement avec une grande priorité mais également avec une bande passante garantie.

Cela permet notamment de déterminer des latences maximales dans les transmissions de ces données et de configurer de manière adaptée les systèmes de combat correspondants.

Les données échangées peuvent comprendre également des données de confidentialités différentes qui doivent être chiffrées afin d'éviter leur interception par une partie tierce.

Enfin, les données échangées peuvent comprendre également des données de divertissement par exemple des personnes se trouvant à bord des engins mobiles. Ces données, bien que peu prioritaires, peuvent présenter des débits importants lorsqu'il s'agit notamment des données multimédia.

Ainsi, en fonction de leur nature, au moins certaines des données précitées forment des flux de données privilégiés qui doivent être transmis en priorité par rapport aux autres flux de données et cela, selon une latence maximale garantie et avec un débit garanti pour chacun de ces flux privilégiés.

Cette assurance de latence et de débit est obtenue en réservant de la bande passante pour chaque flux privilégié, de telle sorte que son transfert entre sa source et sa destination puisse s'effectuer comme si, du point de vue de ce flux, les systèmes de communication étaient libres de toute charge.

Etant donné qu'il existe en général une pluralité de chemins à travers les systèmes de communication entre une source de données et la destination de ces données, et que la réservation dont bénéficie un flux privilégié n'est valable que sur un de ces chemins, il est essentiel pour maîtriser la qualité de service d'imposer que ce flux passe effectivement sur ce chemin.

Pour mettre en œuvre ces échanges, les architectures existantes se présentent généralement sous la forme d'une pluralité de systèmes de communication embarqués à bord des engins mobiles et raccordés entre eux par un réseau de communication composé de liaisons de communication et de commutateurs raccordant ces liaisons. Pour diriger un flux d'un système de communication à un autre, les commutateurs raccordant les systèmes choisissent le meilleur chemin pour chaque flux en fonction d'une logique propre à ces commutateurs. Par exemple, un commutateur peut utiliser une liaison par défaut pour chaque flux d'un type particulier et lorsque cette liaison n'est pas disponible, envoyer ce flux par une autre liaison.

On conçoit ainsi qu'il est difficile d'imposer un chemin particulier pour des flux sauf à intervenir au niveau du réseau de communication en modifiant par exemple la logique utilisée par un ou plusieurs commutateurs ou en modifiant une liaison particulière.

La nécessité d'imposer un chemin particulier peut être édictée par des contraintes opérationnelles courantes comme par exemple le positionnement relatif des engins mobiles ou la nécessité d'être en silence radio, ou par des conditions externes comme par exemple des conditions météorologiques ou des brouillages subis.

Par ailleurs, étant donné qu'un flux privilégié emprunte un chemin sur lequel il bénéficie d'une réservation de débit, et que la capacité physique des liaisons de transmission constituant ce chemin est susceptible de varier au cours du temps, il est indispensable de vérifier en permanence que ce chemin a toujours une bande passante suffisante pour que la réservation reste valable.

Les architectures existantes ne permettent pas non plus de monitorer les chemins empruntés par différent flux notamment en ce qui concerne les délais, les débits utilisés et débits réellement disponibles pour chaque moyen de transmission.

La mesure du débit utilisé n'est pas en soi problématique puisqu'il s'agit de comptabiliser les paquets envoyés vers une plateforme de communication. En revanche, la détermination du débit restant nécessite de connaitre la capacité totale en débit de chaque moyen de transmission.

Il est fondamental de s'intéresser à la capacité totale en débit de chaque moyen de transmission car cette dernière peut varier en fonction des contraintes opérationnelles et des conditions externes, telles que définies précédemment.

Pour le faire, il est possible par exemple d'associer une sonde à chaque liaison de communication apte à mesurer en temps réel la capacité totale de cette liaison. Cela impliquerait toutefois des modifications coûteuses des réseaux de communication existants ainsi qu'une surcharge de trafic généré par ces sondes.

La présente invention a pour but de remédier à ces inconvénients et de proposer une architecture d'échanges capable de gérer efficacement les flux de différents types, tout en permettant d'imposer des chemins particuliers pour ces flux et de monitorer les différents chemins empruntés par ces flux, sans intervenir au niveau du réseau de communication. Autrement dit, l'invention permet de résoudre les problèmes précités sans devoir modifier le réseau de communication existant.

À cet effet, l'invention a pour objet une architecture d'échanges de flux de données conforme à l'objet de la revendication 1.

Suivant d'autres aspects avantageux de l'invention, l'architecture d'échanges selon l'invention comprend une ou plusieurs des caractéristiques des revendications 2 à 10.

La présente invention a également pour objet un procédé d'échanges de flux données conforme à l'objet de la revendication 11.

Ces caractéristiques et avantages de l'invention apparaîtront à la lecture de la description qui va suivre, donnée uniquement à titre d'exemple limitatif, et faite en référence aux dessins annexés sur lesquels :
- [Fig 1] la figure 1 est une vue schématique d'une architecture d'échanges de flux de données dans une formation d'engins mobiles comprenant une pluralité de plateformes de communication, chaque plateforme de communication étant associée à un engin mobile ou à un centre de commandement ;
- [Fig 2] la figure 2 est une vue schématique de l'une des plateformes de communication de la figure 1 avec des liaisons associées à cette plateforme ; et
- [Fig 3] [Fig 4] [Fig 5] les figures 3 à 5 sont différentes vues illustrant la mise en œuvre d'un procédé d'échanges de flux de données selon l'invention.

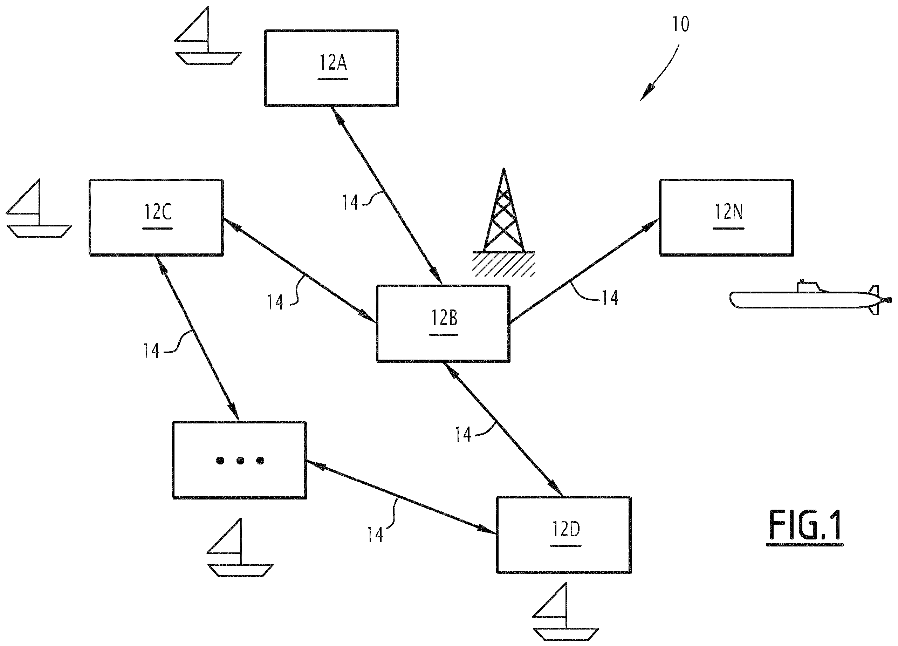

On a en effet illustré sur la figure 1 une architecture d'échanges 10 de flux de données dans une formation d'engins mobiles.

Cette architecture d'échanges 10 comprend une pluralité de plateformes de communication 12A à 12N et des liaisons 14 raccordant au moins certains couples de ces plateformes.

Les liaisons 14 sont formées par des moyens de transmission connus en soi.

Ainsi, chaque liaison 14 est formée entre un couple de plateformes 12A à 12N en utilisant un ou plusieurs moyens de transmission connus en soi.

Ces moyens de transmission sont éventuellement sans fil de même nature ou de natures différentes et sont par exemple choisis en fonction de la nature des engins mobiles. Ces moyens de transmission peuvent aussi être, au moins en partie, filaires lorsque par exemple la ou les plateformes correspondantes sont immobilisées au moins temporairement.

De préférence, chaque moyen de transmission est un moyen de transmission radio ou optique, passant éventuellement par un système de satellites et/ou un système d'aéronefs ou d'aérostats ou d'autres types d'engins mobiles ne faisant pas partie de ladite formation d'engins mobiles.

Chaque liaison 14 présente un débit de transmission de données, appelé également capacité de transmission de cette liaison. Ce débit est mesurable.

Chaque plateforme de communication 12A à 12N est associée à l'un des engins mobiles de la formation ou à un centre de commandement.

Dans l'exemple décrit, chaque engin mobile présente un navire, par exemple un navire de surface ou un navire submersible. La plateforme de communication associée à un tel engin est donc embarquée à bord de celui-ci.

De manière générale, un engin mobile peut présenter tout autre engin, par exemple un engin terrestre ou un aéronef ou encore un engin spatial.

Par « centre de commandement », on entend par exemple un centre de commandement terrestre comportant alors la plateforme de communication qui lui est associée.

Selon d'autres exemples de réalisation, le centre de commandement peut être embarqué également à bord d'un engin mobile, par exemple de même nature que les autres engins ou alors d'une nature différente.

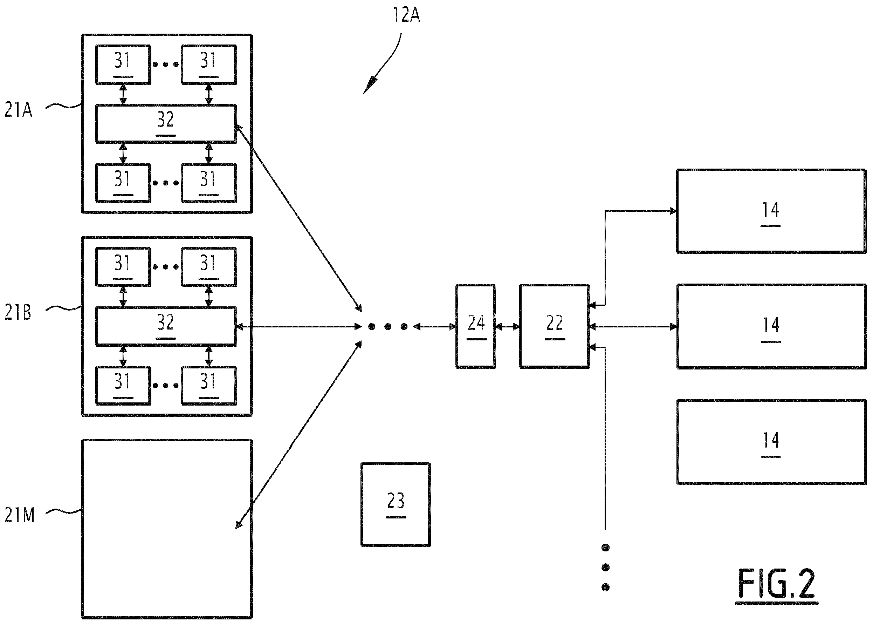

Les plateformes de communication 12A à 12N sont par exemple sensiblement analogues entre elles. Ainsi, par la suite, seule par exemple la plateforme de communication 12A sera décrite en détail en référence à la figure 2.

Ainsi, comme cela est visible sur cette figure 2, la plateforme de communication 12A comprend une pluralité de domaines de sécurité 21A à 21M, un commutateur 22, un module central 23 et un contrôleur de chemins 24. L'ensemble des domaines de sécurité 21A à 21M d'une même plateforme de communication forment un système de communication de cette plateforme. Dans ce cas, les commutateurs 22 de l'ensemble des plateformes de communication 12A à 12N et les liaisons 14 forment un réseau de communication de l'architecture 10.

Chaque domaine de sécurité 21A à 21M est apte à produire des flux de données d'un niveau de confidentialité propre à ce domaine et à recevoir des flux de données du niveau de confidentialité correspondant.

Pour ce faire, chaque domaine de sécurité comprend une pluralité de clients 31 et un réseau informatique 32 raccordant ces clients 31 entre eux.

Le réseau informatique 32 est par exemple un réseau filaire de type LAN connu en soi.

Chaque client 31 présente par exemple un terminal d'accès utilisable par un utilisateur ou un système embarqué.

Ainsi, chaque client 31 est apte à produire des données numériques sous la forme de flux de données et à recevoir des données numériques également sous la forme de flux numériques.

Selon un exemple de réalisation, au moins l'un des clients 31 présente un chiffreur permettant de chiffrer l'ensemble des données sortant de ce domaine selon leur niveau de confidentialité et de déchiffrer les données entrant dans ce domaine, selon des techniques connues en soi. Dans ce cas, l'ensemble des autres clients 31 sont raccordés aux autres domaines de sécurité de la plateforme 12A et des autres plateformes via le chiffreur.

Chaque client 31 est identifiable par une adresse, connue dans l'état sous le terme de « adresse IP ». Cette adresse est par exemple unique au sein de l'architecture 10 ou au moins au sein de chaque domaine de sécurité 21A à 21M, lorsque des chiffreurs sont utilisés. Dans ce dernier cas, chaque chiffreur présente une adresse IP unique au sein de l'architecture 10.

Chaque flux de données émis ou reçu par les clients 31 se présente sous la forme d'une pluralité de paquets. De manière connue en soi, chaque paquet comprend un message utile correspondant aux données utiles destinées à être transmises à un client, et un entête permettant de transmettre ce message via le réseau de communication.

L'entête de chaque paquet comprend notamment un champ de source et un champ de destination. Pour les paquets circulant dans les domaines sécurité 21A à 21M ou entrant dans ces domaines ou sortant de ces domaines, le champ de source définit l'adresse IP du client 31 ayant émis ce paquet ou éventuellement du chiffreur du domaine de sécurité ayant émis ce paquet, et le champ de destination définit l'adresse IP du client 31 auquel ce paquet est destiné ou éventuellement du chiffreur du domaine de sécurité auquel ce paquet est destiné.

Le commutateur 22 raccorde chaque domaine de sécurité 21A à 21M au réseau de communication et notamment aux liaisons 14 et permet de transmettre chaque paquet conformément à la valeur de son champ de destination.

Le module central 23 permet d'établir des règles de gestion de l'ensemble des flux de données dans la plateforme de communication 12A en établissant un plan de communication pour cette plateforme.

En particulier, le plan de communication établi par le module central 23 permet de désigner parmi l'ensemble des flux de données gérés par la plateforme 12A, les flux de données devant être traités comme privilégiés.

Chaque flux privilégié est associé à sa spécification comprenant :
- un identifiant de ce flux ;
- une source de ce flux correspondant à la plateforme de communication destinée à produire ce flux, appelée également plateforme source ;
- une destination de ce flux correspondant à la plateforme de communication destinées à recevoir ce flux, appelée également plateforme destination ; et
- une qualité de service de ce flux.

En particulier, de manière connue en soi, la qualité de service comprend des conditions dans lesquelles ce flux doit être traité.

Ces conditions comprennent notamment des priorités relatives à ce flux, des latences ainsi que son débit de transmission.

Ainsi, chaque plan de communication comprend une liste de spécifications de flux permettant ainsi de définir des flux privilégiés dont la qualité de service est garantie, et de choisir les chemins qu'ils empruntent pour bénéficier de cette garantie.

Pour définir un tel plan de communication, le module central 23 est apte à mettre en œuvre une négociation avec les modules centraux 23 des autres plateformes de communication 12B à 12N afin d'assurer les débits réservés pour chacun des flux privilégiés et plus globalement, leur qualité de service. Cette négociation aboutit à la création pour chaque flux privilégié d'un conduit qui est une réservation de bande passante sur le chemin que parcourra ce flux de bout en bout entre sa plateforme source et sa plateforme destination.

Par ailleurs, pour mettre en œuvre l'exécution du plan de communication établi pour la plateforme de communication 12A, le module central 23 est raccordé à un module de gestion locale au sein de chaque domaine de sécurité 21A à 21M et à un module de gestion globale commune à l'ensemble des domaines de sécurité 21A à 21M. Ces modules de gestion (non-illustrés sur la figure 2) permettent donc d'assurer la gestion des flux de données conformément au plan de communication établi par le module central 23. Leur fonctionnement a été également décrit en détail dans les documents cités ci-dessous.

De manière générale, par « conduit de transmission » pour un flux privilégié, on entend une réservation de bande passante conformément à la spécification de ce flux, sur un chemin de bout en bout déterminé pour ce flux.

Un chemin déterminé pour un flux privilégié passe donc par la plateforme source de ce flux privilégié, sa plateforme destination et lorsque la plateforme source et la plateforme destination ne sont pas raccordées par l'une des liaisons 14, par une ou plusieurs autres plateformes de communication, appelées alors plateformes relais. Un chemin présente donc une suite de liaisons de transmission. En fonction du nombre de flux privilégiés empruntant un même chemin, ce chemin peut contenir plusieurs conduits. Un conduit appartient à un seul chemin.

Chaque conduit de transmission est formé d'une pluralité de segments de conduit. Chaque segment de conduit correspond à un débit réservé sur la liaison 14 raccordant la plateforme source à la plateforme destination du flux associée, ou la plateforme source ou la plateforme destination à l'une des plateformes relais ou deux plateformes relais entre elles.

Ainsi, le débit de chaque segment de conduit est inférieur ou égal au débit total de la liaison 14 correspondant à ce segment.

Enfin, les segments d'un même conduit présentent un débit réservé identique pour un même flux. Ainsi, chaque conduit de transmission présente un débit garanti pour le flux privilégié correspondant.

Le contrôleur de chemins 24 est raccordé entre les domaines de sécurité 21A à 21M et le commutateur 22 et est identifiable par une adresse IP unique au sein de l'architecture 10. Ce contrôleur de chemins 24 permet d'imposer un chemin particulier pour chaque paquet passant via la plateforme de communication 12A et de monitorer l'ensemble des liaisons 14 raccordées à cette plateforme de communication 12A, conformément aux décisions prises par les modules centraux 23.

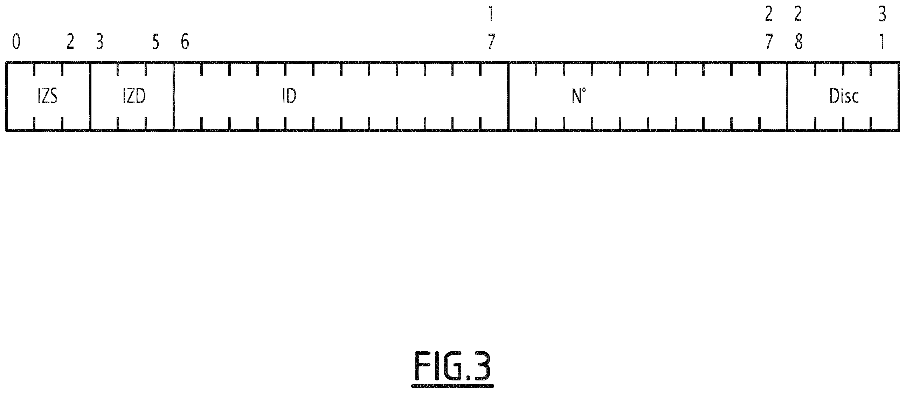

Pour ce faire, le contrôleur de chemins 24 de la plateforme de communication 12A ainsi que les contrôleurs de chemins 24 des autres plateformes de communication 12B à 12N sont aptes à mettre en œuvre un procédé d'échanges de flux de données dans l'architecture 10 qui sera désormais expliqué en détail en référence aux figures 3 à 5.

Ce procédé d'échanges de données comprend une étape d'émission au moins d'un paquet d'un flux privilégié par une plateforme source, une étape de transmission de ce paquet par au moins une plateforme relais et une étape réception de ce paquet par une plateforme destination. Le flux privilégié est alors associé à un conduit de transmission entre la plateforme source et la plateforme destination en passant par au moins ladite plateforme relai. Ce conduit de transmission garantit alors un débit réservé pour ce flux conformément au plan de communication et le respect de ce débit est assuré par les modules de gestion locale et globale de ces plateformes en mettant en œuvre par exemple un ou plusieurs mécanismes décrits dans les documents FR 20 00814, FR 20 00813, FR 20 00811 et FR 20 00809.

Le procédé d'échanges selon l'invention comprend en outre une étape de monitoring d'une liaison 14 suite à la transmission de plusieurs paquets via cette liaison 14.

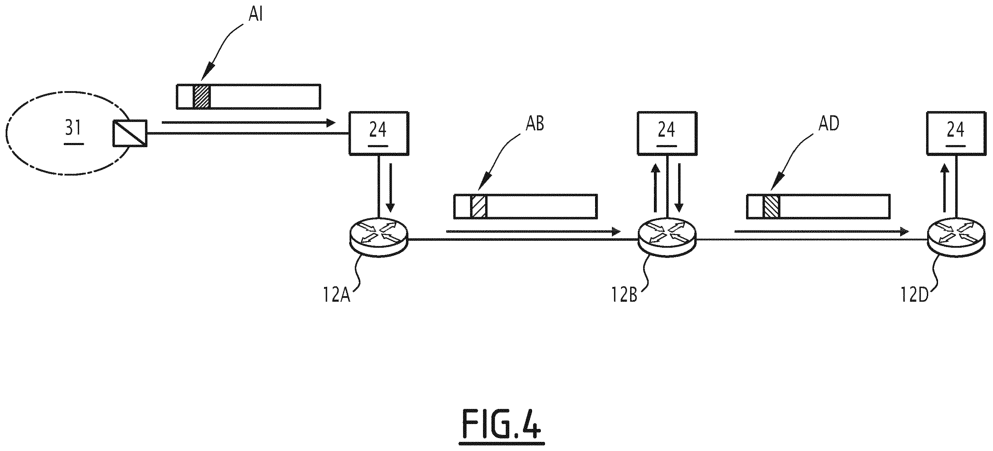

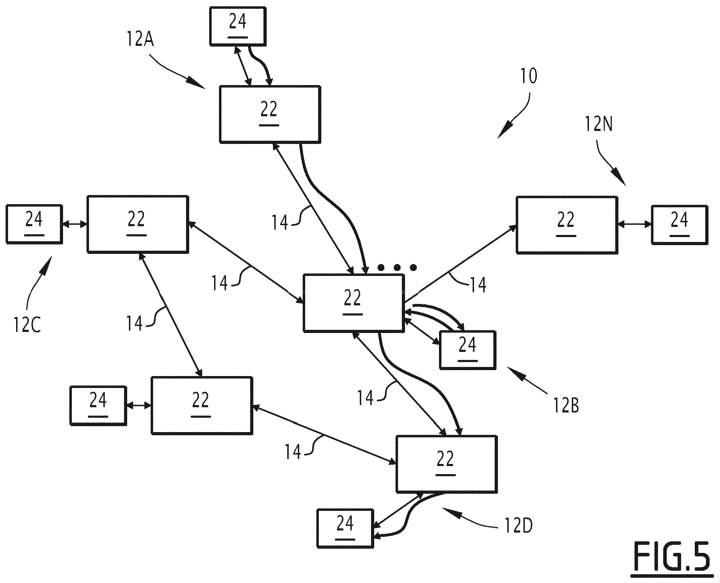

Lors de l'étape d'émission, il est considéré que l'une des plateformes de communication, par exemple la plateforme de communication 12A, émet un paquet faisant partie d'un flux privilégié. Cette plateforme de communication 12A est donc la plateforme source pour ce flux privilégié. Cet exemple est illustré sur les figures 4 et 5 sur lesquelles le paquet est transmis entre les plateformes de communication 12A et 12D en passant par la plateforme de communication 12B.

Il est également considéré que ce paquet est émis par l'un des clients 31 de cette plateforme de communication 12A qui indique dans le champ de source de ce paquet son adresse IP qui sera désigné par la suite adresse de source initiale, et dans le champ de destination de ce paquet l'adresse IP du client 31 de la plateforme de communication auquel ce paquet est destiné. Cette dernière adresse IP sera désignée par la suite adresse de destination initiale et correspond à la référence AI dans l'exemple de la figure 4. Comme expliqué précédemment, les adresses de source initiale et de destination initiale peuvent correspondre aux adresses IP des chiffreurs correspondants.

Avant d'être reçu par le commutateur 22 de la plateforme de communication 12A, le paquet émis est reçu par le contrôleur de chemins 24 de cette plateforme 12A qui modifie l'adresse de destination de ce paquet pour le renvoyer vers le contrôleur de chemins 24 d'une plateforme de communication suivante qui est déterminée selon le conduit de transmission associé au flux de ce paquet. Dans l'exemple des figures 4 et 5, la plateforme de communication suivante est la plateforme de communication 12B.

Pour ce faire, le contrôleur de chemins 24 de la plateforme de communication 12A modifie tout d'abord le champ de source du paquet.

Plus particulièrement, le contrôleur de chemins 24 modifie le champ de source du paquet en y mettant des données de transmission utilisables pour la transmission de ce paquet.

Selon un exemple de réalisation, ces données de transmission comprennent un identifiant de source correspondant à l'adresse de source initiale de ce paquet, un identifiant de destination correspondant à l'adresse de destination initiale de ce paquet, un identifiant de conduit identifiant le conduit de transmission du flux de données privilégié auquel ce paquet appartient et une référence de paquet pour mesurer le débit réel de la liaison 14 correspondante, comme cela sera expliqué par la suite.

Selon un exemple particulier de l'invention, les données de transmission peuvent comprendre en outre des données additionnelles pour des usages spécifiques.

Un exemple d'un champ de source modifié pour contenir les données de transmission est illustré sur la figure 3. Ce champ s'étend par exemple sur 32 bits.

Ainsi, dans l'exemple de cette figure, le champ de source modifié par le contrôleur 24 comprend notamment un sous-champ IZS comprenant l'identifiant de source, un sous-champ IZD comprenant l'identifiant de destination, un sous-champ ID comprenant l'identifiant de conduit, un sous-champ N° comprenant la référence de paquet et un sous-champ Disc comprenant les données additionnelles telles que définies précédemment.

Les identifiants de source et de destination sont déterminés par le contrôleur de chemins 24 en utilisant par exemple une table de correspondance entre ces identifiants et les adresses IP réelles des clients 31 correspondants. Une telle table de correspondance est par exemple transmise par le module central 23 de la plateforme 12A préalablement à la mise en œuvre du procédé.

L'identifiant de conduit, qui permet à chaque contrôleur de chemins 24 d'une plateforme donnée de connaître le prochain contrôleur de chemins 24 auquel il doit envoyer les paquets du conduit, est par exemple également transmis au contrôleur de chemins 24 de cette plateforme par le module central 23 de la même plateforme préalablement à la mise en œuvre du procédé.

Enfin, la référence de paquet correspond par exemple au numéro séquentiel de ce paquet parmi l'ensemble des paquets émis dans une même liaison 14 à partir de la plateforme de communication 12A.

Lors de la même étape d'émission, le contrôleur de chemins 24 modifie en outre le champ de destination en y mettant l'adresse IP du contrôleur de chemins 24 de la plateforme de communication suivante, selon le conduit de transmission correspondant.

Sur la figure 4, cette adresse IP est désignée par la référence AB qui correspond alors à l'adresse IP du contrôleur de chemins 24 de la plateforme de communication 12B.

Ainsi, le commutateur 22 de la plateforme de communication 12A est forcé d'envoyer le paquet via la liaison 14 raccordant les plateformes de communication 12A et 12B, comme cela est illustré sur la figure 5. De plus, cela force également le commutateur 22 de la plateforme de commutation 12B à transmettre le paquet reçu vers son contrôleur de chemins 24.

L'étape de transmission suivante est alors mise en œuvre par ce contrôleur de chemins 24 de la plateforme de commutation 12B.

Lors de cette étape de transmission, le contrôleur de chemins 24 de la plateforme de communication 12B modifie le champ de destination du paquet reçu pour le transmettre vers le contrôleur de chemins d'une plateforme de communication suivante déterminée également selon le conduit de transmission de ce paquet. Dans l'exemple des figures 4 et 5, il s'agit de la plateforme de communication 12D.

Pour ce faire, comme dans la précédente étape d'émission, le contrôleur de chemins 24 met dans le champ de destination de ce paquet l'adresse IP du contrôleur de chemins 24 de la plateforme de communication suivante.

Dans l'exemple de la figure 4, le contrôleur de chemins 24 de la plateforme de communication 12B met donc dans ce champ l'adresse du contrôleur de chemins 24 de la plateforme de communication 12D qui est désignée sur cette figure par la référence AD.

Lors de la même étape, le contrôleur de chemins 24 de la plateforme de communication 12B modifie en outre la référence de paquet dans le champ de source en y mettant le numéro séquentiel de ce paquet parmi l'ensemble des paquets transmis via la liaison 14 raccordant les plateformes 12B et 12D.

Enfin, le contrôleur de chemins 24 de la plateforme de communication 12B émet le paquet ainsi modifié vers le commutateur 22 de la même plateforme qui est forcé de le transmettre vers le commutateur 22 de la plateforme de communication 12D. Ce dernier, à la réception de ce paquet, est donc aussi forcé de le transmettre au contrôleur de chemins 24 de la même plateforme de communication 12D.

À la réception de ce paquet, le contrôleur de chemins 24 de la plateforme de communication 12D détermine qu'il s'agit de la plateforme destination de ce paquet, en analysant l'identifiant de conduit compris dans le champ de source de ce paquet.

Puis, ce contrôleur de chemins 24 extrait les autres données de transmission du champ de source de paquet et en utilisant une table de correspondance similaire à celle décrite en relation avec l'étape d'émission, détermine l'adresse de source initiale et l'adresse de destination initiale.

Ainsi, ce contrôleur 24 rétablit le champ de destination en y mettant l'adresse de destination initiale et le champ de source en y mettant l'adresse de source initiale. Puis, le contrôleur de chemins 24 transmet ce paquet à l'un des clients 31 de la plateforme de communication 12D conformément à l'adresse de destination initiale. Ce paquet est donc identique au paquet initialement émis par le client 31 correspondant.

Comme expliqué précédemment, l'étape de monitoring d'une liaison 14 est mise en œuvre par un couple de plateformes de communication raccordées par cette liaison après la transmission de plusieurs paquets.

En particulier, lors de cette étape, le contrôleur de chemins 24 de l'une de ces plateformes de communication détermine un taux de perte de paquets en comparant le nombre de paquets émis et reçus à travers la liaison 14. Cette comparaison est faite en analysant les références de paquet émis/reçu.

Par exemple, le contrôleur de chemins 24 de la plateforme de communication recevant des paquets de la liaison 14 peut comparer le nombre de paquets réellement reçus à partir d'un instant donné ou de l'instant d'émission d'un paquet donné avec le nombre séquentiel inscrit dans le champ de source du dernier paquet reçu. Selon un autre exemple, tous les paquets émis sont numérotés de 1 à N, formant ainsi une séquence de N paquets. Les mesures sont par exemple effectuées pour chaque séquence de N paquets reçus.

Il est possible de mettre en œuvre la même technique avec les paquets émis par l'une des plateformes. Dans ce cas, le contrôleur de chemins 24 de la plateforme recevant ces paquets peut émettre vers le contrôleur de chemins 24 de la plateforme émettrice le nombre de paquets reçus à partir de l'instant d'émission d'un paquet identifié par une référence de paquet particulier. Ce dernier contrôleur de chemins 24 compare alors ce nombre avec le nombre de paquets émis dans la liaison 14 à partir du même instant.

Lorsque le contrôleur de chemins 24 correspondant constate un taux perte de paquets supérieur à une certaine tolérance, il peut en conclure une baisse de débit réel de la liaison 14 correspondante. Ce contrôleur 24 peut donc transmettre cette information au module central 23 correspondant qui déclenche une reconfiguration des conduits de transmission de l'architecture 10 pour prendre en compte cette baisse de débit.

On conçoit alors que la présente invention présente un certain nombre d'avantages.

Tout d'abord l'invention permet d'imposer des chemins particuliers aux paquets circulant entre différentes plateformes de communication conformément aux réservations de débits effectués. Cela permet alors de prendre en compte des contraintes opérationnelles et des conditions externes. En outre, cela est fait sans aucune intervention au niveau de commutateurs ce qui permet de garder le réseau de communication existant inchangé. De plus, l'invention permet de garder des échanges efficaces au sein de l'architecture, tout en respectant la qualité de service des flux privilégiés.

Enfin, les échanges effectués ne modifient pas la forme initiale des paquets transmis et ne rajoutent pas de trafic supplémentaire dans le réseau de communication.

## Revendications

1. Architecture d'échanges (10) de flux de données dans une formation d'engins mobiles, comprenant une pluralité de plateformes de communication (12A,...,12N) et des liaisons (14) raccordant ces plateformes de communication (12A,...,12N) entre elles, chaque liaison (14) étant formée entre un couple de plateformes (12A,...,12N), chaque plateforme de communication (12A,...,12N) étant associée à l'un des engins mobiles ou à un centre de commandement, et comprenant au moins un domaine de sécurité (21A,...,21M) apte à émettre et à recevoir des flux de données privilégiés et un commutateur (22) raccordant le ou chaque domaine de sécurité aux liaisons (14), chaque domaine de sécurité (21A,...,21M) comprend une pluralité de clients (31) et un réseau informatique (32) raccordant ces clients entre eux, chaque flux de données privilégié étant composées d'une pluralité de paquets destinés à être transmis entre une plateforme source (12A,..., 12N) et une plateforme destination (12A,...,12N) selon un conduit de transmission réservé pour ce flux et présentant une réservation de bande passante conformément à une spécification de ce flux, sur un chemin de bout en bout déterminé pour ce flux ;
l'architecture (10) étant **caractérisée en ce que** chaque plateforme de communication (12A,...,12N) comprend en outre un contrôleur de chemins (24) raccordé entre le ou chaque domaine de sécurité (21A,...,21M) et le commutateur (22) correspondants, identifiable par une adresse et configuré pour modifier chaque paquet reçu, lorsque cette plateforme de communication (12A,...,12N) n'est pas la plateforme destination de ce paquet, pour le renvoyer vers le contrôleur de chemins (24) d'une plateforme de communication (12A,...,12N) suivante raccordée par une liaison (14) à cette plateforme de communication (12A,...,12N).

2. Architecture (10) selon la revendication 1, dans laquelle :
- chaque paquet comprend un entête comprenant un champ de source définissant initialement une adresse de source initiale associée à un client (31) de la plateforme source (12A,...,12N) de ce paquet, et un champ de destination définissant initialement une adresse de destination initiale associée à un client (31) de la plateforme destination (12A,...,12N) de ce paquet ;
- le contrôleur de chemins (24) de chaque plateforme de communication (12A,...,12N) est configuré pour mettre dans le champ de destination de chaque paquet reçu l'adresse du contrôleur de chemins (24) vers lequel ce paquet est renvoyé, lorsque cette plateforme de communication (12A,...,12N) n'est pas la plateforme destination de ce paquet.

3. Architecture (10) selon la revendication 2, dans laquelle le contrôleur de chemins (24) de chaque plateforme de communication (12A,..., 12N) est configuré en outre pour modifier le champ de source de chaque paquet dont cette plateforme de communication (12A,..., 12N) est la plateforme source, en y mettant des données de transmission utilisables pour la transmission de ce paquet.

4. Architecture (10) selon la revendication 3, dans laquelle les données de transmission de chaque paquet comprennent un identifiant de source correspondant à l'adresse de source initiale de ce paquet, un identifiant de destination correspondant à l'adresse de destination initiale de ce paquet et un identifiant de conduit identifiant le conduit de transmission du flux de données privilégié auquel ce paquet appartient.

5. Architecture (10) selon la revendication 4, dans laquelle le contrôleur de chemins (24) de chaque plateforme de communication (12A,..., 12N) comprend une table de correspondance entre les identifiants de source et les adresses de source initiales correspondantes, et les identifiants de destination et les adresses de destination initiales correspondantes.

6. Architecture (10) selon l'une quelconque des revendications 3 à 5, dans laquelle le contrôleur de chemins (24) de chaque plateforme de communication (12A,..., 12N) est configuré en outre pour rétablir dans le champ de destination et dans le champ de source de chaque paquet reçu respectivement l'adresse de destination initiale et l'adresse de source initiale, en utilisant les données de transmission de ce paquet, lorsque cette plateforme de communication (12A,..., 12N) est la plateforme destination de ce paquet.

7. Architecture (10) selon l'une quelconque des revendications précédentes, dans laquelle le contrôleur de chemins (24) de chaque plateforme de communication est configuré pour déterminer pour chaque paquet reçu la plateforme de communication (12A,...,12N) suivante conformément au conduit de transmission du flux de données privilégié auquel ce paquet appartient.

8. Architecture (10) selon l'une quelconque des revendications précédentes, dans laquelle au moins l'un des contrôleurs de chemins (24) de chaque couple de plateformes de communication (12A,...,12N) connectées par une liaison (14) est configuré pour mesurer un débit réel de cette liaison en comparant le nombre de paquets émis dans cette liaison et reçus de celle-ci avec l'autre contrôleur de chemins (24).

9. Architecture (10) selon la revendication 8 prise en combinaison avec la revendication 4, dans laquelle le contrôleur de chemins (24) de chaque plateforme de communication (12A,...,12N) est configuré pour inscrire dans les données de transmission de chaque paquet à émettre via une liaison (14) une référence de paquet correspondant au numéro séquentiel de ce paquet parmi l'ensemble des paquets émis dans cette liaison (14).

10. Architecture (14) selon la revendication 8 ou 9, dans laquelle chaque plateforme de communication (12A,..., 12N) comprend en outre un module central (23) apte à reconfigurer au moins un conduit de transmission d'au moins un flux de données privilégié passant par cette plateforme (12A,...,12N), lorsque le débit réel sur au moins une liaison (14) utilisée par ce conduit est inférieur au débit réservé sur cette liaison.

11. Procédé d'échange de flux données dans l'architecture (10) selon l'une quelconque des revendications précédentes, comprenant les étapes suivantes, mises en œuvre par le contrôleur de chemins (24) de chaque plateforme de communication (12A,..., 12N) :
- recevoir un paquet ;
- lorsque cette plateforme de communication (12A,...,12N) n'est pas la plateforme destination de ce paquet, modifier ce paquet pour le renvoyer vers le contrôleur de chemins (24) d'une plateforme de communication (12A,...,12N) suivante raccordée par une liaison (14) à cette plateforme de communication (12A,...,12N).

## Patentansprüche

1. Architektur (10) für den Datenstromaustausch in einem Verband mobiler Maschinen, umfassend eine Vielzahl von Kommunikationsplattformen (12A, ..., 12N) und Verbindungen (14), die diese Kommunikationsplattformen (12A, ..., 12N) miteinander verbinden, wobei jede Verbindung (14) zwischen einem Paar von Plattformen (12A, ..., 12N) gebildet wird, wobei jede Kommunikationsplattform (12A, ..., 12N) einer der mobilen Maschinen oder einer Steuerzentrale zugeordnet ist, und mindestens eine Sicherheitsdomäne (21A, ..., 21M), die imstande ist, privilegierte Datenströme zu senden und zu empfangen, und einen Switch (22) umfasst, der die oder jede Sicherheitsdomäne mit den Verbindungen (14) verbindet, wobei jede Sicherheitsdomäne (21A, ..., 21M) eine Vielzahl von Clients (31) und ein Computernetzwerk (32) umfasst, das diese Clients miteinander verbindet, wobei jeder privilegierte Datenstrom aus einer Vielzahl von Paketen zusammengesetzt ist, die dazu bestimmt sind, zwischen einer Quellplattform (12A, ..., 12N) und einer Zielplattform (12A, ..., 12N) gemäß einem für diesen Strom reservierten Übertragungskanal, der eine Bandbreitenreservierung gemäß einer Spezifikation dieses Stroms aufweist, auf einem für diesen Strom bestimmten End-zu-End-Pfad übertragen zu werden;
wobei die Architektur (10) **dadurch gekennzeichnet ist, dass** jede Kommunikationsplattform (12A, ..., 12N) ferner einen Pfadcontroller (24) umfasst, der zwischen der oder jeder entsprechenden Sicherheitsdomäne (21A, ..., 21M) und dem Switch (22) angeschlossen ist, der durch eine Adresse identifizierbar und konfiguriert ist, um jedes empfangene Paket zu modifizieren, wenn diese Kommunikationsplattform (12A, ..., 12N) nicht die Zielplattform dieses Pakets ist, um es an den Pfadcontroller (24) einer nächsten Kommunikationsplattform (12A, ..., 12N) zurückzuschicken, die über eine Verbindung (14) mit dieser Kommunikationsplattform (12A, ..., 12N) verbunden ist.

2. Architektur (10) nach Anspruch 1, wobei:
- jedes Paket einen Header umfasst, der ein Quellfeld, das zunächst eine initiale Quelladresse definiert, die einem Client (31) der Quellplattform (12A, ..., 12N) dieses Pakets zugeordnet ist, und ein Zielfeld umfasst, das zunächst eine initiale Zieladresse definiert, die einem Client (31) der Zielplattform (12A, ..., 12N) dieses Pakets zugeordnet ist;
- der Pfadcontroller (24) jeder Kommunikationsplattform (12A, ..., 12N) konfiguriert ist, um in das Zielfeld jedes empfangenen Pakets die Adresse des Pfadcontrollers (24) zu setzten, zu dem dieses Paket zurückgeschickt wird, wenn diese Kommunikationsplattform (12A, ..., 12N) nicht die Zielplattform dieses Pakets ist.

3. Architektur (10) nach Anspruch 2, wobei der Pfadcontroller (24) jeder Kommunikationsplattform (12A, ..., 12N) ferner konfiguriert ist, um das Quellfeld jedes Pakets, für das diese Kommunikationsplattform (12A, ..., 12N) die Quellplattform ist, durch Einsetzen von Übertragungsdaten, die für die Übertragung dieses Pakets verwendbar sind, zu modifizieren.

4. Architektur (10) nach Anspruch 3, wobei die Übertragungsdaten jedes Pakets eine Quellkennung, die der initialen Quelladresse dieses Pakets entspricht, eine Zielkennung, die der initialen Zieladresse dieses Pakets entspricht, und eine Kanalkennung, die den Übertragungskanal des privilegierten Datenstroms identifiziert, zu dem dieses Paket gehört, umfassen.

5. Architektur (10) nach Anspruch 4, wobei der Pfadcontroller (24) jeder Kommunikationsplattform (12A, ..., 12N) eine Entsprechungstabelle zwischen den Quellkennungen und den entsprechenden initialen Quelladressen und den Zielkennungen und den entsprechenden initialen Zieladressen umfasst.

6. Architektur (10) nach einem der Ansprüche 3 bis 5, wobei der Pfadcontroller (24) jeder Kommunikationsplattform (12A, ..., 12N) ferner konfiguriert ist, um im Zielfeld und im Quellfeld jedes empfangenen Pakets jeweils die initiale Zieladresse und die initiale Quelladresse unter Verwendung der Übertragungsdaten dieses Pakets wiederherzustellen, wenn diese Kommunikationsplattform (12A, ..., 12N) die Zielplattform dieses Pakets ist.

7. Architektur (10) nach einem der vorhergehenden Ansprüche, wobei der Pfadcontroller (24) jeder Kommunikationsplattform konfiguriert ist, um für jedes empfangene Paket die nächste Kommunikationsplattform (12A, ..., 12N) gemäß dem Übertragungskanal des privilegierten Datenstroms, zu dem dieses Paket gehört, zu bestimmen.

8. Architektur (10) nach einem der vorhergehenden Ansprüche, wobei mindestens einer der Pfadcontroller (24) jedes Paars von Kommunikationsplattformen (12A, ..., 12N), die durch eine Verbindung (14) verbunden sind, konfiguriert ist, um einen tatsächlichen Durchsatz dieser Verbindung zu messen, indem die Anzahl der Pakete, die in dieser Verbindung gesendet und von dieser empfangen werden, mit dem anderen Pfadcontroller (24) verglichen wird.

9. Architektur (10) nach Anspruch 8 in Kombination mit Anspruch 4, wobei der Pfadcontroller (24) jeder Kommunikationsplattform (12A, ..., 12N) konfiguriert ist, um in die Übertragungsdaten jedes über eine Verbindung (14) zu sendenden Pakets eine Paketreferenz einzutragen, eine Paketreferenz, die der fortlaufenden Nummer dieses Pakets unter allen in dieser Verbindung gesendeten Paketen entspricht.

10. Architektur (14) nach Anspruch 8 oder 9, wobei jede Kommunikationsplattform (12A, ..., 12N) ferner ein zentrales Modul (23) umfasst, das imstande ist, mindestens einen Übertragungskanal für mindestens einen privilegierten Datenstrom, der über diese Plattform (12A, ..., 12N) läuft, neu zu konfigurieren, wenn der tatsächliche Durchsatz auf mindestens einer Verbindung (14), die von diesem Kanal genutzt wird, kleiner ist als der auf dieser Verbindung reservierte Durchsatz.

11. Verfahren für den Datenstromaustausch in der Architektur (10) nach einem der vorhergehenden Ansprüche, das die folgenden Schritte umfasst, die von dem Pfadcontroller (24) jeder Kommunikationsplattform (12A, ..., 12N) durchgeführt werden:
- Empfangen eines Pakets;
- wenn diese Kommunikationsplattform (12A, ..., 12N) nicht die Zielplattform dieses Pakets ist, Modifizieren dieses Pakets, um es an den Pfadcontroller (24) einer nächsten Kommunikationsplattform (12A, ..., 12N) zurückzuschicken, die über eine Verbindung (14) mit dieser Kommunikationsplattform (12A, ..., 12N) verbunden ist.

## Claims

1. An architecture (10) for exchanging data flows within a formation of mobile machines, comprising a plurality of communication platforms (12A, ..., 12N) and links (14) connecting these communication platforms (12A, ..., 12N) to one another, each link (14) being formed between a pair of platforms (12A, ..., 12N), each communication platform (12A, ..., 12N) being associated with one of the mobile machines or with a command centre, and comprising at least one security domain (21A, ..., 21M) capable of transmitting and receiving privileged data flows, and a switch (22) connecting the one or each security domain to the links (14), each security domain (21A, ..., 21M) comprising a plurality of clients (31) and a computer network (32) interconnecting these clients, each privileged data flow being composed of a plurality of packets intended to be transmitted between a source platform (12A, ..., 12N) and a destination platform (12A, ..., 12N) via a transmission channel reserved for this flow and having a bandwidth reservation in accordance with a specification of this flow, along an end-to-end path determined for this flow;
the architecture (10) being **characterised in that** each communication platform (12A, ..., 12N) further comprises a path controller (24) connected between the one or each security domain (21A, ..., 21M) and the corresponding switch (22), identifiable by an address and configured to modify each received packet, when this communication platform (12A, ..., 12N) is not the destination platform of that packet, in order to forward it to the path controller (24) of a subsequent communication platform (12A, ..., 12N) connected to this communication platform (12A, ..., 12N) by a link (14).

2. An architecture (10) according to claim 1, wherein:
- each packet comprises a header comprising a source field initially defining an initial source address associated with a client (31) of the source platform (12A, ..., 12N) of this packet, and a destination field initially defining an initial destination address associated with a client (31) of the destination platform (12A, ..., 12N) of this packet;
- the path controller (24) of each communication platform (12A, ..., 12N) is configured to put in the destination field of each packet received the address of the path controller (24) to which this packet is returned, when this communication platform (12A, ..., 12N) is not the destination platform of this packet.

3. An architecture (10) according to claim 2, wherein the path controller (24) of each communication platform (12A, ..., 12N) is further configured to modify the source field of each packet for which this communication platform (12A, ..., 12N) is the source platform, by putting therein transmission data usable for the transmission of this packet.

4. An architecture (10) according to claim 3, in which the transmission data of each packet comprises a source identifier corresponding to the initial source address of this packet, a destination identifier corresponding to the initial destination address of this packet and a channel identifier identifying the transmission channel of the privileged data flow to which this packet belongs.

5. An architecture (10) according to claim 4, in which the path controller (24) of each communication platform (12A, ..., 12N) comprises a mapping table between source identifiers and the corresponding initial source addresses, and destination identifiers and the corresponding initial destination addresses.

6. An architecture (10) according to any one of claims 3 to 5, wherein the path controller (24) of each communication platform (12A, ..., 12N) is further configured to restore in the destination field and in the source field of each received packet respectively the initial destination address and the initial source address, using the transmission data of this packet, when this communication platform (12A, ..., 12N) is the destination platform of this packet.

7. An architecture (10) according to any one of the preceding claims, in which the path controller (24) of each communication platform is configured to determine for each packet received the next communication platform (12A, ..., 12N) in accordance with the transmission path of the privileged data flow to which this packet belongs.

8. An architecture (10) according to any one of the preceding claims, in which at least one of the path controllers (24) of each pair of communication platforms (12A, ..., 12N) connected by a link (14) is configured to measure an actual throughput of this link by comparing the number of packets transmitted in this link and received therefrom with the other path controller (24).

9. An architecture (10) according to claim 8 taken in combination with claim 4, in which the path controller (24) of each communication platform (12A, ..., 12N) is configured to write in the transmission data of each packet to be transmitted via a link (14) a packet reference corresponding to the sequential number of this packet from among all the packets transmitted in this link (14).

10. An architecture (14) according to claim 8 or 9, in which each communication platform (12A, ..., 12N) further comprises a central module (23) capable of reconfiguring at least one transmission channel for at least one privileged data flow passing through this platform (12A, ..., 12N), when the actual throughput on at least one link (14) used by this channel is less than the reserved throughput on this link.

11. A method of exchanging data flows in the architecture (10) according to any one of the preceding claims, comprising the following steps, implemented by the path controller (24) of each communication platform (12A, ..., 12N):
- receive a packet;
- when this communication platform (12A, ..., 12N) is not the destination platform of this packet, modifying this packet so as to send it back to the path controller (24) of a subsequent communication platform (12A, ..., 12N) connected by a link (14) to this communication platform (12A, ..., 12N).
